# EUROPEAN PATENT SPECIFICATION

(11) **EP 2 630 902 B1**
(45) Date of publication and mention of the grant of the patent: **06.05.2015**
(21) Application number: 13156101.1
(22) Date of filing: 21.02.2013
(51) Int. Cl.: A47L 9/20, A47L 5/36, A47L 9/12

(54) **Vacuum cleaner with reverse air jet filter cleaning device**
Staubsauger mit Filterreinigungsvorrichtung mit Gegenstromdüsen
Aspirateur avec un dispositif de nettoyage du filtre par jet d'air inversé

(30) Priority: 23.02.2012 IT CR20120003
(43) Date of publication of application: 28.08.2013
(73) Proprietor: Solarys S.r.L., 26030 Pessina Cremonese (CR) (IT)
(72) Inventor: Bettella, Giancarlo, 26100 Cremona (IT)
(74) Representative: Marcio', Paola

(56) References cited:
- EP-A1- 1 464 266
- EP-A2- 1 997 411
- US-A- 4 007 026

## Description

The present invention relates to the industrial vacuum cleaner sector.

In particular, the invention relates to a vacuum cleaner with a reverse air jet filter cleaning device.

A problem with industrial vacuum cleaners is the rapid clogging of the internal filters, requiring frequent interventions to remove the deposits of solid particles from said filters, and to restore their efficiency, at least in part.

The filters are arranged between a chamber placed under vacuum conditions by an intake turbine and a dust-laden air intake chamber for collecting and accumulating said dust once it has been separated from the air flow drawn up.

Filters normally comprise one or more cartridges placed in parallel, each cylindrical in shape, with a side surface composed of a sheet of pleated porous material, the bottom of which is closed and the top has a circular opening through which the air flows after being filtered as it passes through said porous material.

EP 1 464 266 A1 discloses a filter cleaning device which exploits the main air flow of the vacuum cleaner, when the vacuum cleaner is switched off, and which uses, at the same time, a pneumatic mechanical movement to shake the filters.

It is also known that it is possible to clean a filter by passing a secondary jet of cleaning air through it, in the opposite direction to the primary flow of air that passes through the filter during normal operation.

Some vacuum cleaners are provided, for this purpose, with a reverse air jet filter cleaning device that, by means of a compressor, generates a high-pressure jet of air adapted to strike each of said filters in turn, thereby cyclically freeing them from the dust that has accumulated thereon.

US 4 007 026 A describes such a vacuum cleaner according to the preamble of claim 1.

In general, said devices comprise, for each filter, an emission duct for the reverse jet cleaning air and specific solenoid control valves activated in rotation by a control unit with a timer.

Said emission ducts and the inlets of said filters are not in direct contact with each other, but are separated from each other by the space taken up by the chamber placed under vacuum conditions by the intake turbine, and the cone of reverse air, which is emitted by each duct in the direction of the circular opening at the top of the filter, therefore only partially strikes the porous material making up the side surface of the cylindrical filter.

Disadvantageously, therefore, the effectiveness of the filter cleaning depends specifically on the position and range of the cone of reverse air: if the emission ducts are placed far away from the filters, because the chamber under vacuum conditions is high, the air pressure only acts on the top of said filters, and does not have enough power to clean and shake the bottom part thereof, and vice-versa if the emission duct is placed very close to the filters, the cleaning at the top will be ineffective.

Filter cleaning always takes place while the vacuum cleaner is in operation, and therefore the secondary reverse air jet must be at a very high pressure to overcome the vacuum effect already present inside the vacuum cleaner and required for normal operation thereof.

Such high pressures can only be achieved by using compressors, which however disadvantageously are quite cumbersome, resulting in high electricity consumption and making the vacuum cleaner heavier and impractical.

Even more disadvantageously, such high reverse jet air pressures, in addition to the risk of breaking the filters, in most cases also lead to problems of condensation: any humidity that may form in the compressed air storage tank is emitted along with the reverse air jet and mixes with the dust, thereby dirtying the filter even more and damaging the vacuum cleaner.

The aim of the present invention is to eliminate these disadvantages, by providing a vacuum cleaner with a reverse air jet filter cleaning device that is particularly effective even with a low-pressure reverse jet of secondary cleaning air, which does not damage the filters, consumes little energy, avoids the formation of condensation and can also be easily adapted to any type of vacuum cleaner.

These aims are achieved by a vacuum cleaner with reverse air jet filter cleaning device comprising:
- suction means of known type associated with a vacuum chamber and activated by a control unit;
- cartridge filter means to filter a primary flow of dust-laden air connected to said vacuum chamber;
- containment means to contain the dust drawn up and retained by said filter means,
   wherein said reverse air jet filter cleaning device comprises:
- feed means to feed a secondary reverse air jet;
- emission ducts connected to said feed means;
- solenoid control valves associated with said emission ducts and that can be selectively activated by said control unit,
**characterized in that** said filter cleaning device comprises sleeves, connected between said emission ducts and said cartridge filter means,
and each sleeve comprises a plurality of ports adapted to place the inside of the sleeve in communication with said vacuum chamber to ensure suction of the primary flow of dust-laden air, wherein said sleeve comprises movable means slidingly associated therewith, adapted to reversibly close said ports during cleaning of said filter means and to simultaneously allow the passage of said secondary reverse air jet.

According to a first embodiment of the invention, said movable means comprise a piston, sliding in said sleeve as a result of the thrust of the secondary reverse air jet, against the action of elastic return means, so as to cause, through its alternating movement, the opening and closing of said ports, where said piston is provided on its head with a plurality of holes, adapted to allow the passage of said secondary reverse air jet toward said filter means.

In particular, said sleeve is associated with said filter means by means of an elastomeric type airtight gasket.

According to a further embodiment of the invention, said elastic return means comprise a helical spring coaxial with said sleeve, arranged between the head of said piston and a ring fixed to an intermediate section of said sleeve.

According to a possible embodiment of the invention, said means to feed said secondary reverse air jet comprise a blower controlled by said control unit and placed in connection with the outside atmosphere from which it draws air to transfer it to said emission ducts through a distribution manifold.

According to a further embodiment of the invention, said filter means comprise a plurality of cartridge filters connected in parallel to said vacuum chamber and to said distribution manifold by means of said sleeves.

According to a possible embodiment of the invention, said filter cleaning device comprises at least one motorized filter shaker controlled by said control unit, together with said solenoid valves, comprising a striking mass adapted to strike said filter to exert a mechanical shaking action.

The main advantage of the invention is that said emission ducts for the secondary reverse air jet are connected directly to the filter means by means of sleeves, so that each individual filter, when being cleaned, can be isolated from the remaining vacuum cleaner filters, which remain active, thereby making the cleaning action more effective without losing any power.

A further advantage is the fact that it is no longer necessary for the cleaning air to have the high pressures needed to overcome the primary flow of dust-laden air created by the vacuum cleaner's suction effect, because it is introduced into a filter without any intake airflow, yet is still connected to the containment chamber for the dust drawn up, which, since it is kept under vacuum conditions, favors the passage of the reverse jet cleaning air from the isolated filter to said drawn up dust containment chamber.

The use of lower pressures and consequent avoidance of the need for compressed air storage also eliminates problems associated with the formation of condensation, and allows the use of less powerful blowers, making the device more economical, lighter, with lower electricity consumption and much smaller dimensions, and therefore easy to fit to various models of vacuum cleaner, which can therefore be used on sites with a limited electricity supply.

Furthermore, the use of a piston with a perforated head, sliding alternately inside the sleeve as a result of the thrust of the secondary reverse air jet and of the return action exerted by a spring compressed by the same piston as it moves, allows the ports on the sleeve to be automatically reversibly closed and opened as soon as the relative solenoid valve is selectively activated by the control unit, without the need for any specific additional electromechanical devices.

These and other advantages of the present invention will become more apparent from the following detailed description of an embodiment thereof, which is illustrated by no way of limitation in the accompanying drawings, in which:
figure 1 shows a partially exploded perspective view of a vacuum cleaner with a reverse air jet filter cleaning device according to the invention;
figure 2 shows a transparent overhead plan view of the vacuum cleaner with a reverse air jet filter cleaning device shown in fig. 1;
figure 3 shows a schematic, axial cross-section view along the vertical plane III-III shown in figure 2, of the vacuum cleaner with a reverse air jet filter cleaning device shown in figure 1;
figures 4 and 5 show a transparent front view and a cross-section view, according to a vertical plane respectively, of a detail of the reverse air jet filter cleaning device during operation;
figures 6 and 7 show a transparent front view and a cross-section view, according to a vertical plane respectively, of a detail of the reverse air jet filter cleaning device when in standby;
figures 8-10 show an overhead view, a cross-section view along a vertical plane IX-IX, and an axonometric view, respectively, of a detail of the filter cleaning device;
figure 11 shows a cross-section view along a vertical plane of a possible more complete embodiment of the reverse air jet filter cleaning device according to the invention.

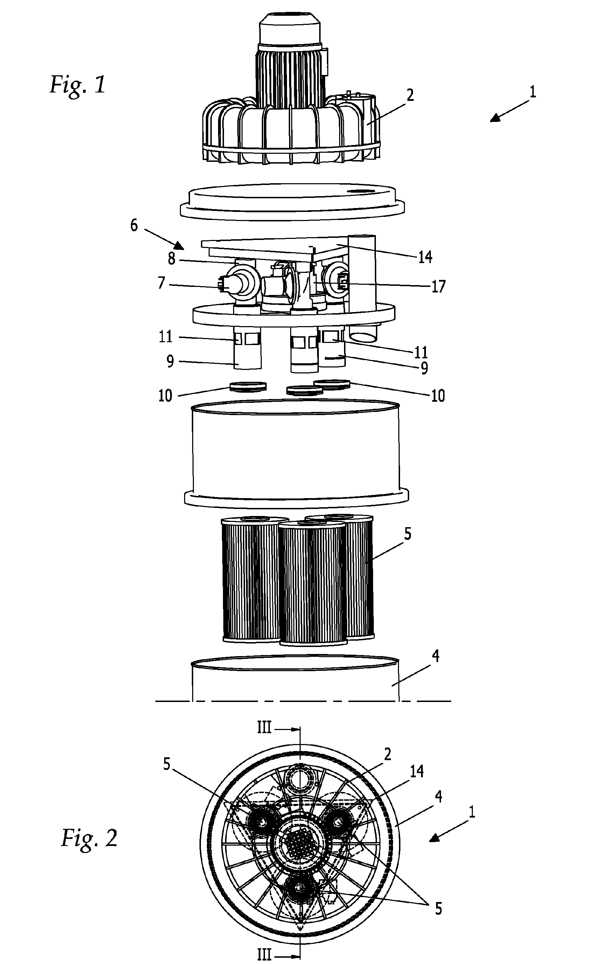

With reference to the details shown in figures 1-3, the invention relates to a vacuum cleaner 1, particularly an industrial type cleaner, with a reverse air jet filter clearing device.

The vacuum cleaner 1 essentially comprises suction means associated with a vacuum chamber 3 and activated by a control unit (not shown), filter means to filter a primary flow of dust-laden air F connected to said vacuum chamber 3 and containment means 4 to contain the dust drawn up and retained by said filter means.

Said suction means comprise a turbine 2 adapted to place said chamber 3 under vacuum conditions.

Said filter means, in the embodiment shown, comprise three cartridge type filters 5.

Said containment means 4 consist of a cylindrical tank provided with a disposal outlet (not shown) for the dust drawn up, according to prior art.

Said filter cleaning device comprises feed means 6 to feed a secondary jet of air F' in the opposite direction to the primary flow of dust-laden air F, in order to clean said filters 5.

The feed means 6 are provided with emission ducts 8 provided with solenoid control valves 7, that can be selectively activated by said control unit, to open or close the passage through said emission ducts 8.

Said filter cleaning device comprises, for each filter 5, a sleeve 9 connected between said emission ducts 8 and said filters 5, which passes through said vacuum chamber 3.

In particular, each sleeve 9 is associated with its respective filter 5 by means of an elastomeric type airtight gasket 10, such as an O-Ring.

Each sleeve 9 comprises a plurality of lateral ports 11 adapted to place the inside of the sleeve 9 in communication with said vacuum chamber 3 to ensure suction of the primary flow of dust-laden air F.

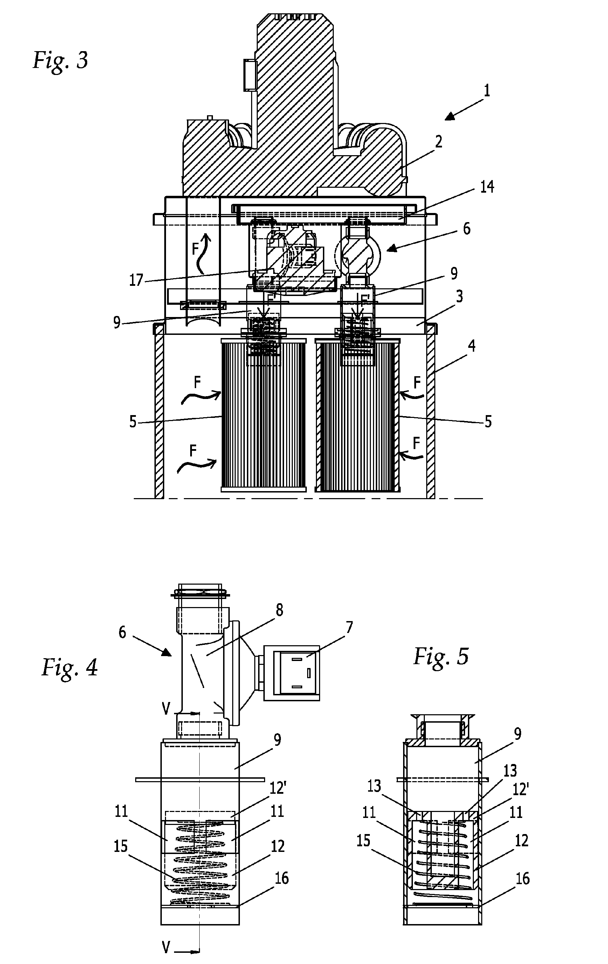

With reference to the details shown in figures 4-7, each sleeve 9 also comprises movable means slidingly associated therewith and adapted to reversibly close said ports 11 during clearing of said filter means and to simultaneously allow the passage of said secondary reverse air jet F'.

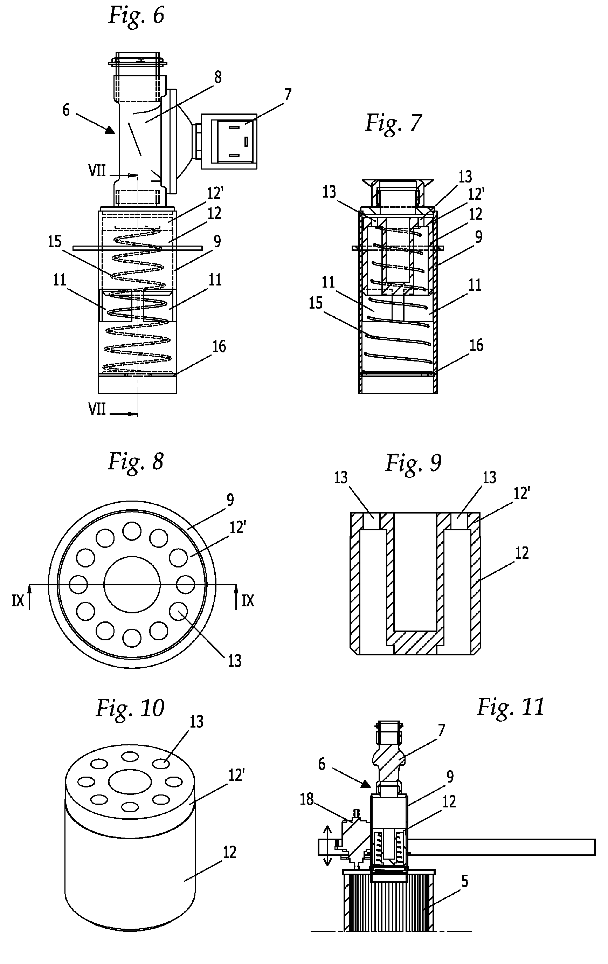

Said movable means comprise a piston 12 sliding in said sleeve 9 as a result of the thrust of the secondary reverse air jet F' against the action of elastic return means so as to cause, by means of its alternating movement, the reversible opening (figures. 6-7) and closing (figures. 4-5) of said ports 11.

The piston 12 slides with a small amount of clearance with respect to the inner surface of the sleeve 9, so that the alternating movement of the piston 12 can cause the substantially airtight opening and closing of the ports 11.

Advantageously, the sleeve 9 is made of metal, while the piston 12 is made of a self-lubricating material such as Teflon^{®}.

As shown in figures 8-10, said piston 12 is also provided, on its head 12', with a plurality of holes 13 adapted to allow the passage of said secondary reverse air jet F' toward said filter means.

The holes 13 are distributed uniformly on the surface of the head 12' of the piston 12.

Said elastic return means comprise a helical spring 15 coaxial with said sleeve 9, arranged between the head 12' of said piston 12 and a ring 16 fixed to an intermediate section of said sleeve 9.

The helical spring 15 has a truncated conical shape to better adapt to working conditions.

In a preferred embodiment of the invention, said feed means 6 to feed the secondary reverse air jet F' comprise a blower 17 controlled by said control unit and placed in connection with the outside atmosphere from which it draws air to transfer it to said emission ducts 8 through a distribution manifold 14.

The device subject of the present invention, however, may similarly be provided with other feed means adapted to generate the secondary reverse air jet F' in the sleeves 9, including for example a suction assembly different from the one shown, or a compressed air intake connectable to an external compressor, or simply an air intake connected to the outside atmosphere.

In the embodiment shown in figure 11, on the filter cleaning device a known solenoid-type motorized filter shaker 18 is fitted, for each filter 5, in parallel with the piston 12.

Said motorized filter shaker 18 is controlled by the control unit at the same time as the respective solenoid valve 7 and, during the passage of the secondary reverse air jet F', produces a mechanical cleaning action, thanks to an alternating vertical translation movement of a striking mass adapted to repeatedly strike the top surface of the respective filter 5 on which it is fitted, causing the shaking of said filter and thereby helping to remove the dust.

According to the invention, during normal operation of the vacuum cleaner, the primary flow of dust-laden air F passes through the filters 5 to the vacuum chamber 3 through the ports 11 and is then emitted clean to the outside atmosphere through the turbine 2.

During the cyclical cleaning operation of the filters 5, the control unit is pre-set to feed pressurized air F' into the manifold 14, into the emission ducts 8 and into the sleeves 9, by activating the compressed air feed means 6 connected thereto.

Said control unit, controlling the cyclical opening of the solenoid valves 7, simultaneously also activates the blower 17 that draws air in from the outside and introduces it under pressure into the emission ducts 8, to which the device sleeves 9 are connected.

The secondary reverse air jet F' thus generated pushes each piston 12 in turn downwards inside the respective sleeve 9, as shown in figures 4 and 5.

As it descends, the piston 12 compresses the spring 15 and its cylindrical body causes the ports 11 to close, so that all the reverse air jet F' is directed inside the filter 5 without any dispersion.

In particular, the passage of the reverse air jet F' inside the sleeve 9 goes through the holes 13 provided in the head 12' of the piston.

Once the filter 5 has been cleaned, the control unit closes the respective solenoid valve 7, the pressure on the piston head 12' decreases and, consequently, the piston 12 rises as a result of the thrust from the helical spring 15, as shown in figures 6 and 7.

The rising piston 12 re-opens the ports 11 and the filter 5 is placed under vacuum conditions once again by being re-connected to the suction chamber 3.

If the motorized filter shaker device 18 is also present, the control unit activates it at the same time as the respective solenoid valve 7 is opened, and the cleaning action of the filter 5, generated by the secondary reverse air jet F', is increased by the mechanical action of striking and vibrating the motorized filter shaker 18.

## Claims

1. Vacuum cleaner (1) with reverse air jet filter cleaning device comprising:
- suction means (2) of known type associated with a vacuum chamber (3) and activated by a control unit;
- cartridge filter means (5) to filter a primary flow of dust-laden air (F) connected to said vacuum chamber (3);
- containment means (4) to contain the dust drawn up and retained by said filter means,
wherein said reverse air jet filter cleaning device comprises:
- feed means (6) to feed a secondary reverse air jet (F');
- emission ducts (8) connected to said feed means (6);
- solenoid control valves (7) associated with said emission ducts (8) and that can be selectively activated by said control unit,
**characterized in that** said filter cleaning device comprises sleeves (9), connected between said emission ducts (8) and said cartridge filter means (5), and each sleeve (9) comprises a plurality of ports (11) adapted to place the inside of the sleeve (9) in communication with said vacuum chamber (3) to ensure suction of the primary flow of dust-laden air (F), wherein said sleeve (9) comprises movable means slidingly associated therewith, adapted to reversibly close said ports (11) during cleaning of said filter means (5) and to simultaneously allow the passage of said secondary reverse air jet.

2. A vacuum cleaner (1) with reverse air jet filter cleaning device according to claim 1, **characterized in that** said movable means comprise a piston (12), sliding in said sleeve (9) as a result of the thrust of the secondary reverse air jet (F'), against the action of elastic return means, so as to cause, through its alternating movement, the opening and closing of said ports (11), where said piston (12) is provided on its head (12') with a plurality of holes (13), adapted to allow the passage of said secondary reverse air jet (F') toward said filter means.

3. A vacuum cleaner (1) with reverse air jet filter cleaning device according to claim 1, **characterized in that** said sleeve (9) is associated with said filter means by means of an elastomeric type airtight gasket (10).

4. A vacuum cleaner (1) with reverse air jet filter cleaning device according to claim 2, **characterized in that** said elastic return means comprise a helical spring (15) coaxial with said sleeve (9), arranged between the head (12') of said piston and a ring (16) fixed to an intermediate section of said sleeve (9).

5. A vacuum cleaner (1) with reverse air jet filter cleaning device according to claim 1, **characterized in that** said means (6) to feed said secondary reverse air jet (F') comprise a blower (17) controlled by said control unit and placed in connection with the outside atmosphere from which it draws air to transfer it to said emission ducts (8) through a distribution manifold (14).

6. A vacuum cleaner (1) with reverse air jet filter cleaning device according to claim 1, **characterized in that** said filter means comprise a plurality of cartridge filters (5) connected in parallel to said vacuum chamber (3) and to said distribution manifold by means of said sleeves (9).

7. A vacuum cleaner (1) with reverse air jet filter cleaning device according to claim 1, **characterized in that** it comprises at least one motorized filter shaker (18) controlled by said control unit, together with said solenoid valves (7), comprising a striking mass adapted to strike said filter (5) to exert a mechanical shaking action.

## Patentansprüche

1. Staubsauger (1) mit Filterreinigungsvorrichtung mit Gegenstromdüsen umfassend:
- Saugmittel (2) bekannten Typs, mit einer Vakuumkammer (3) verbunden und durch eine Steuereinheit aktiviert;
- Patronenfiltermittel (5), um einen primären Fluss von staubgeladener Luft (F) zu filtern, verbunden mit besagter Vakuumkammer (3);
- Umschließungsmittel (4), um den aufgesaugten und durch besagte Filtermittel eingefangenen Staub aufzunehmen,
wobei besagte Filterreinigungsvorrichtung mit Gegenstromdüsen Folgendes umfasst:
- Einspeisemittel (6), um einen sekundären Gegenluftstrom (F') einzuspeisen;
- Ausstoßrohre (8), verbunden mit besagten Einspeisemitteln (6);
- Solenoid-Regelventile (7), verbunden mit besagten Ausstoßrohren (8) und selektiv durch besagte Steuereinheit aktivierbar,
**gekennzeichnet dadurch, dass** besagte Filterreinigungsvorrichtung Hülsen (9) umfasst, die zwischen besagten Ausstoßrohren (8) und besagten Patronenfiltermitteln (5) verbunden sind, und jede Hülse (9) eine Mehrzahl von Öffnungen (11) umfasst, geeignet, dass die Innenseite der Hülse (9) mit besagter Vakuumkammer (3) in Verbindung gesetzt wird, um die Absaugung des primären Flusses von staubgeladener Luft (F) zu gewährleisten, wobei besagte Hülse (9) bewegliche Mittel umfasst, die gleitend mit ihr verbunden sind, und geeignet sind, besagte Öffnungen (11) während der Reinigung besagter Filtermittel (5) reversibel zu verschließen und gleichzeitig den Durchfluss des besagten sekundären Gegenluftstroms zu ermöglichen.

2. Ein Staubsauger (1) mit Filterreinigungsvorrichtung mit Gegenstromdüsen gemäß Anspruch 1, **gekennzeichnet dadurch, dass** besagte bewegliche Mittel einen Kolben (12) umfassen, der in besagter Hülse (9) als Ergebnis der Schubkraft des sekundären Gegenluftstroms (F') gegen die Tätigkeit der elastischen Rückkehrmittel gleitet und somit durch seine wechselnde Bewegung das Öffnen und Schließen der besagten Öffnungen (11) verursacht, wobei besagter Kolben (12) an seinem Kopf (12') mit einer Mehrzahl von Öffnungen (13) versehen ist, die geeignet sind, dass sie den Durchfluss des besagten sekundären Gegenluftstroms (F') zu besagten Filtermitteln erlauben.

3. Ein Staubsauger (1) mit Filterreinigungsvorrichtung mit Gegenstromdüsen gemäß Anspruch 1, **gekennzeichnet dadurch, dass** besagte Hülse (9) mit besagten Filtermitteln durch eine luftdichte Dichtung (10) elastomeren Typs verbunden ist.

4. Ein Staubsauger (1) mit Filterreinigungsvorrichtung mit Gegenstromdüsen gemäß Anspruch 2, **gekennzeichnet dadurch, dass** besagte elastische Rückkehrmittel eine mit besagter Hülse (9) koaxiale Schraubenfeder (15) umfassen, angebracht zwischen dem Kopf (12') des besagten Kolbens und einem Ring (16), der in der Mitte der besagten Hülse (9) befestigt ist.

5. Ein Staubsauger (1) mit Filterreinigungsvorrichtung mit Gegenstromdüsen gemäß Anspruch 1, **gekennzeichnet dadurch, dass** besagte Mittel (6) zum Einspeisen des sekundären Gegenluftstroms (F') einen Blaser (17) umfassen, der durch besagte Steuereinheit gesteuert wird und in Verbindung mit der Außenatmosphäre gesetzt wird, von der er Luft bezieht, die er zu den besagten Ausstoßrohren (8) über einen Verteiler (14) weiterleitet.

6. Ein Staubsauger (1) mit Filterreinigungsvorrichtung mit Gegenstromdüsen gemäß Anspruch 1, **gekennzeichnet dadurch, dass** besagte Filtermittel eine Mehrzahl Patronenfilter (5) umfassen, die mit besagter Vakuumkammer (3) und mit besagtem Verteiler durch besagte Hülsen (9) parallel verbunden sind.

7. Ein Staubsauger (1) mit Filterreinigungsvorrichtung mit Gegenstromdüsen gemäß Anspruch 1, **gekennzeichnet dadurch, dass** sie mindestens einen motorisierten Filterrüttler (18) umfasst, der durch besagte Steuereinheit gesteuert wird, gemeinsam mit besagten Solenoid-Regelventilen (7), die ein Schlaggewicht umfassen, geeignet, besagten Filter (5) zu schlagen, um eine mechanische Schüttelaktion auszuüben.

## Revendications

1. Aspirateur (1) avec un dispositif de nettoyage du filtre par jet d'air inversé comprenant :
- des moyens d'aspiration (2) de type connu associés à une chambre d'aspiration (3) et activés par une unité de commande ;
- des moyens de filtrage à cartouche (5) pour filtrer un flux principal d'air chargé de poussière (F) raccordés à ladite chambre d'aspiration (3) ;
- des moyens de confinement (4) pour contenir la poussière aspirée et retenue par lesdits moyens de filtrage,
où ledit dispositif de nettoyage du filtre par jet d'air inversé comprend :
- des moyens d'alimentation (6) pour alimenter un jet d'air inversé secondaire (F') ;
- des conduites d'émission (8) raccordées auxdits moyens d'alimentation (6) ;
- des électrovannes de commande (7) associées auxdites conduites d'émission (8) et qui peut être sélectivement activées par ladite unité de commande,
**caractérisé par le fait que** ledit dispositif de nettoyage du filtre comprend des manchons (9), raccordés entre lesdites conduites d'émission (8) et lesdits moyens de filtrage à cartouche (5), et que chaque manchon (9) comprend une multitude d'orifices (11) adaptés pour placer l'intérieur du manchon (9) en communication avec ladite chambre d'aspiration (3) afin d'assurer la succion du flux principal d'air chargé de poussière (F), où ledit manchon (9) comprend des moyens mobiles associés par coulissement à celui-ci, adaptés pour fermer de manière réversible lesdits orifices (11) durant le nettoyage desdits moyens de filtrage (5) et permettre simultanément le passage dudit jet d'air inversé secondaire.

2. Aspirateur (1) avec un dispositif de nettoyage du filtre par jet d'air inversé selon la revendication 1, **caractérisé par le fait que** lesdits moyens mobiles comprennent un piston (12), coulissant dans ledit manchon (9) sous l'effet de la poussée du jet d'air inversé secondaire (F'), contre l'action de moyens de retour élastiques, de manière à causer, grâce à ce mouvement alternatif, l'ouverture et la fermeture desdits orifices (11), où ledit piston (12) est doté sur sa tête (12') d'une multitude de trous (13), prévus pour permettre le passage dudit jet d'air inversé secondaire (F') vers lesdits moyens de filtrage.

3. Aspirateur (1) avec un dispositif de nettoyage du filtre par jet d'air inversé selon la revendication 1, **caractérisé par le fait que** ledit manchon (9) est associé auxdits moyens de filtrage à l'aide d'un joint étanche à l'air de type élastomère (10).

4. Aspirateur (1) avec un dispositif de nettoyage du filtre par jet d'air inversé selon la revendication 2, **caractérisé par le fait que** lesdits moyens de retour élastiques comprennent un ressort hélicoïdal (15) coaxial avec ledit manchon (9), disposé entre la tête (12') dudit piston et une bague (16) fixée sur une section intermédiaire dudit manchon (9).

5. Aspirateur (1) avec un dispositif de nettoyage du filtre par jet d'air inversé selon la revendication 1, **caractérisé par le fait que** lesdits moyens (6) pour alimenter ledit jet d'air inversé secondaire (F') comprennent une soufflante (17) commandée par ladite unité de commande et placée en connexion avec l'atmosphère extérieure de laquelle elle aspiré l'air pour le transférer auxdites conduites d'émission (8) à travers un collecteur de distribution (14).

6. Aspirateur (1) avec un dispositif de nettoyage du filtre par jet d'air inversé selon la revendication 1, **caractérisé par le fait que** lesdits moyens de filtrage comprennent une multitude de filtres à cartouche (5) raccordés en parallèle à ladite chambre d'aspiration (3) et audit collecteur de distribution à l'aide desdits manchons (9).

7. Aspirateur (1) avec un dispositif de nettoyage du filtre par jet d'air inversé selon la revendication 1, **caractérisé par le fait qu'**il comprend au moins un agitateur de filtre motorisé (18) commandé par ladite unité de commande, conjointement avec lesdites électrovannes (7), comprenant une masse de frappe prévue pour heurter ledit filtre (5) afin d'exercer une action d'agitation mécanique.
